# EUROPEAN PATENT APPLICATION

(11) **EP 4 721 933 A1**
(43) Date of publication of application: **08.04.2026**
(21) Application number: 24861725.0
(22) Date of filing: 30.07.2024
(51) Int. Cl.: B25J 9/16

(54) **INTEGRATED CONTROL METHOD FOR MOBILE COMPOSITE ROBOT**

(30) Priority: 05.09.2023 CN 202311142424
(71) Applicant: Shanghai Sage Intelligent Technology Co., Ltd., Shanghai 200240 (CN)
(72) Inventor: ZHANG, Jianzheng, Shanghai 200240 (CN); DONG, Yi, Shanghai 200240 (CN); WEI, Kun, Shanghai 200240 (CN); ZOU, Jinpei, Shanghai 200240 (CN); LI, Fangbao, Shanghai 200240 (CN)
(74) Representative: Monteiro Alves, Inês
(86) International application number: PCT/CN2024/108333
(87) International publication number: WO 2025/050880

(57) **Abstract**

An integrated control method and control apparatus for a mobile composite robot, and a computer-readable storage medium and a mobile composite robot. The integrated control method for a mobile composite robot is characterized in that the mobile composite robot is provided with a moving body (1), a robotic arm (2) and an end effector (3). The integrated control method comprises the following steps: S1, describing a moving body (1), a robotic arm (2), an end effector (3) and an operation object in a unified world coordinate system, constructing a description equation for dynamic characteristics of a mobile composite robot on the basis of the unified world coordinate system, so as to express the motion state and posture of the mobile composite robot, and on the basis of trajectory planning data and the current state data of the robot, describing and expressing a robot calculation model; S2, performing coupling calculation on the basis of the robot calculation model which is obtained in step S1, so as to generate an action instruction for the end effector (3) of the mobile composite robot; and S3, performing decoupling calculation on the basis of the action instruction for the end effector (3) that is obtained in step S2, so as to decouple and decompose the action instruction into a speed control instruction for the moving body (1) of the robot and torque control instructions for joints of the robotic arm (2), and also using dynamic real-time data of the moving body (1) and dynamic real-time data of the robotic arm (2) as feedback amounts and inputting same into the current state data of the robot in step S1.

## Description

### TECHNICAL FIELD

The present invention relates to the field of robot technologies, and particularly to an integrated control method for a mobile composite robot.

### BACKGROUND ART

In the field of smart manufacturing, mobile composite robots are progressively entering production systems and becoming components of entire factory production systems. For example, in automated production line loading and unloading processes, mobile manipulation robots must synchronize with production line takt to complete assigned tasks within prescribed time and rhythm, and thus relatively high requirements are imposed on operation efficiency and velocity of the robot, and even if the velocity can meet takt requirement, operational precision also needs to be satisfied.

However, under existing technical conditions, mobile manipulation robots mostly adopt a control method with separate mobile chassis control and robotic arm control. Such control method has low engineering implementation complexity and generally can meet requirements of simple operations with low complexity and accuracy requirements. However, during implementation, the inventors found that at least following problems exist in the prior art: typically, the mobile chassis firstly moves to a destination and stops, and then the robotic arm acts, resulting in low robot operation efficiency; in some special scenarios, once the robotic arm acts, it may be found that an operation object cannot be executed with sufficient degrees of freedom or redundancy, and the robot adjusts a pose of a mobile body again, thereby destroying fluency of operational actions. Most of the above cases are caused by the separate control adopted by the robot, which frequently leads to repeated pose adjustments by the robot, reduced operational efficiency, and failure to meet requirements in some industrial scenarios requiring relatively high production takt.

Therefore, there is an urgent need for an integrated control method capable of simultaneously controlling movement of a robot body and a robotic arm, in which movement of the robot and operation of the robotic arm are simultaneously controlled as an organic whole, thereby improving action efficiency and fluency of operational action of the robot, so as to meet demands of production takt.

### SUMMARY

In view of this, in an aspect of embodiments of the present description, an integrated control method for a mobile composite robot is provided, so as to improve the action efficiency of the robot and the fluency of operational action, and meet demands of production takt.

Embodiments of the present description provide technical solutions as follows.

Provided is an integrated control method for a mobile composite robot, where the mobile composite robot is provided with a mobile body, a robotic arm, and an end effector, and the integrated control method includes steps of:
S1: describing the mobile body, the robotic arm, the end effector, and an operation object in a unified world coordinate system, constructing description equations for dynamic characteristics of the mobile composite robot based on the unified world coordinate system, expressing a motion state and a posture of the mobile composite robot; and describing and expressing a robot calculation model based on trajectory planning data and current robot state data;
S2: performing coupling calculation based on the robot calculation model obtained in step S1, to generate an action instruction for the end effector of the mobile composite robot; and
S3: performing decoupling calculation based on the action instruction for the end effector obtained in step S2, performing decoupling and decomposition to obtain a velocity control instruction for the mobile body and a torque control instruction for each joint of the robotic arm, while inputting dynamic real-time data of the mobile body and the robotic arm as feedback amounts into the current robot state data in the step S1.

Further, in the step S1, the trajectory planning data is derived from a robot dispatch system or calculated by the mobile composite robot: the robot dispatch system directly sends the trajectory planning data wirelessly to the mobile composite robot; alternatively, the robot dispatch system sends task data to the mobile composite robot, and the mobile composite robot calculates to obtain a trajectory for the mobile body and an action path for the robotic arm; and

Further, in the step S2, the coupling calculation includes behavioral data calculation, obstacle avoidance algorithms, end-effector protection stop algorithms, and constraint condition algorithms, where the behavioral data calculation includes posture control calculation, compliance control calculation, and singularity avoidance calculation.

Further, in the step 2, the posture control calculation is generating an optimized action instruction for the end effector based on position data of the operation object and the current robot state data during movement of the mobile composite robot, while satisfying at least one of constraint conditions as follows: the robotic arm performing an operation within a specified angle and arm-span range; defining two priorities based on arm-span range, where a small arm-span operation within a defined-distance operation range less than a maximum arm-span length of the robotic arm is defined with high priority; and a large arm-span operation within another defined-distance operation range is defined with low priority, so as to handle the operation object that fails to be addressed by a small arm span.

Further, in the step S2, the compliance control calculation determines a torque magnitude based on force conditions at the end effector to execute movement operation control on the mobile body, where the force conditions are determined by a torque sensor mounted on the end effector or the robotic arm or by real-time parameters from the joint of the robotic arm reflecting the force conditions at the end effector, and where if a component value of an end dragging or pushing force in a movement direction of the mobile composite robot in the force conditions exceeds a set threshold and a current action attribute is dragging or pushing, a movement function is calculated for the mobile composite robot.

Further, in the step S2, the singularity avoidance calculation is, upon the mobile composite robot arriving at proximity of the operation object, if each joint of the robotic arm and the end effector are near a singularity, re-planning the trajectory for the mobile body and the action path for the robotic arm to avoid entering a singularity region.

Further, in the step S2, an overall behavioral data calculation result for the robot is derived from learning outcomes of training learning of a deep artificial intelligence algorithm, where the deep artificial intelligence algorithm integrates the posture control calculation, the compliance control calculation, and the singularity avoidance calculation, a training model continuously performs optimization calculation on integrated calculation parameters, and outputs a result of the optimization calculation in a form of parameter to a result of the coupling calculation; and input parameters of the training model further include primary parameters reflecting performance and action characteristics of the mobile composite robot, including: a movement velocity and an acceleration of the mobile body, a velocity, an acceleration, an angle, and a torque value of an end joint of the robotic arm, and an instruction error value of the trajectory planning data.

Provided is a control apparatus for a mobile composite robot, implementing any method as described in the above, and including: a unified world coordinate calculation unit, including the unified world coordinate calculation method configured to express a motion state and a posture of the mobile composite robot; a coupling calculation unit, including a behavioral data calculation module, an obstacle avoidance algorithm module, an end effecter protection stop module, and a constraint condition module, and configured to generate an action instruction for the end effecter, where the behavioral data calculation module includes a posture control calculation module, a compliance control calculation module, and the singularity avoidance, and is configured to generate an optimized action instruction for the end effecter; and a decoupling calculation unit, including a decoupling calculation method, and configured to generate a velocity control instruction for the mobile body and a torque control instruction for each joint of the robotic arm.

Provided is a mobile composite robot, including the mobile body, the robotic arm, the end effector, a control apparatus of the mobile composite robot, a robot dispatch system, a CPU processor system configured to run a main control loop algorithm, and a memory storing a program instruction.

Further, the mobile composite robot further includes a GPU processor system configured for deep learning algorithms.

Provided is a computer-readable storage medium, storing a computer program instruction thereon, where the computer program instruction, when being executed by a processor, implements any method as described in the above.

Compared with the prior art, at least one technical solution adopted in the embodiments of the present description at least can achieve following beneficial effects.

The unified world coordinate calculation module of the present invention describes the coordinate system of the mobile body, coordinates of the robotic arm, and coordinates of the end effector based on the world coordinate system in a unified manner, and unified mobile robot dynamic characteristic data facilitates expressing the motion state and posture of each part of the mobile composite robot, thereby reducing calculation costs of the coupling calculation module.

In the present invention, coupling calculation is performed on the robot calculation model, control effects of various coupling modules are formed in robot control, and operations on the operation object can be executed in one go, thereby improving system efficiency and fluency of actions.

The posture control module in the present invention adjusts action postures of the mobile body and the robotic arm of the robot while the robot is moving, thus optimizing operation actions, and offering an operating region with more flexible degrees of freedom and guaranteed precision.

The posture control module in the present invention enables the robotic arm to operate within a specified angle and arm-span range, and when processing a large load, the high priority, i.e., the small arm span, is employed to enhance the operation stability, so as to maintain stability of the mobile body to the maximum extent.

The posture control module in the present invention can freely define an optimal end operation range for the robotic arm. When operating within this range, the robotic arm has superior control performance, and a chassis of the robot body has optimal stability and balance performance, which can ensure high-precision actions and rapid response capability for the end effector of the robotic arm.

The posture control module in the present invention is capable of adapting to operations in more confined scenarios, and performing preemptive judgment through real-time calculation while the robot is moving towards the operation object, to autonomously adjust a travel posture, thereby achieving positioning through more continuous adjustments.

The compliance control module in the present invention can control the robot body to move to a certain extent in coordination with the end of the robotic arm in the forward or backward direction, thus enhancing operational flexibility and compliance of the robot.

The singularity avoidance calculation module in the present invention plans the robot trajectory and the action path for the robotic arm in advance and more accurately determines an action trajectory within a certain range of the operation object, thereby avoiding entering the singularity region.

The present invention adopts the deep artificial intelligence algorithms to train and learn real-time data of the robot and optimize control, and couples learning outcomes into the control loop, thereby improving the system performance.

### BRIEF DESCRIPTION OF DRAWINGS

In order to more clearly illustrate technical solutions in embodiments of the present invention, drawings which need to be used in the embodiments will be introduced briefly below. Apparently, the drawings in the description below merely show some embodiments of the present invention, and those ordinarily skilled in the art still could obtain other drawings in light of these drawings, without making inventive efforts.
FIG. 1 is a control framework of an integrated control method for a mobile composite robot according to the present invention;
FIG. 2 is a flowchart for steps of an integrated control method for a mobile composite robot according to the present invention;
FIG. 3 is a schematic diagram of a mobile manipulation robot and a world coordinate system in an integrated control method for a mobile composite robot according to the present invention;
FIG. 4 is a schematic diagram of a robot top-view operation range in an integrated control method for a mobile composite robot according to the present invention;
FIG. 5 is a schematic diagram of posture control of an integrated control method for a mobile composite robot according to the present invention in a multi-obstacle narrow scenario;
FIG. 6 is a schematic diagram of compliance control of an integrated control method for a mobile composite robot according to the present invention;
FIG. 7 is a block diagram of compliance control of an integrated control method for a mobile composite robot according to the present invention;
FIG. 8 is a schematic diagram of singularity calculation of an integrated control method for a mobile composite robot according to the present invention;
FIG. 9 is a schematic diagram of control loop of an integrated control method for a mobile composite robot of the present invention incorporated with deep learning; and
FIG. 10 is a schematic diagram of an integrated control apparatus for a mobile composite robot according to the present invention.

In the drawings: 1. mobile body; 2. robotic arm; 3. end effector; 11. unified world coordinate calculation module; 12. coupling calculation module; 13. decoupling calculation module.

### DETAILED DESCRIPTION OF EMBODIMENTS

Embodiments of the present invention are described in detail below in conjunction with drawings.

The embodiments of the present invention are illustrated below with specific examples. Those skilled in the art could readily understand other advantages and effects of the present invention from contents disclosed in the description. Apparently, some but not all embodiments of the present invention are described. The present invention can also be implemented or applied through other different embodiments, and details in the present description can also be modified or changed without deviating from the spirit of the present invention based on different views and applications. It should be noted that the following embodiments and features in the embodiments can be combined with each other without conflict. Based on the embodiments in the present invention, all of other embodiments obtained by those ordinarily skilled in the art without making inventive efforts shall fall within the scope of protection of the present invention.

It is to be stated that the following description illustrates various aspects of the embodiments within the scope of the appended claims. It should be apparent that the aspects described herein may be embodied in a wide variety of forms and that any specific structure and/or function described herein is merely illustrative. Based on the present invention, those skilled in the art should appreciate that one aspect described herein could be implemented independently of any other aspect, and that two or more of these aspects could be combined in various ways. For example, the apparatus and/or method of practice may be implemented using any number and aspect set forth herein. Furthermore, such apparatus may be implemented and/or such method may be practiced using other structures and/or functionalities in addition to one or more of the aspects set forth herein.

It should be noted that diagrams provided in the following embodiments illustrate the basic concept of the present invention only in a schematic manner, and that schemata only show components related to the present invention rather than drawing according to the number, shape, and size of the components at the time of actual implementation, the type, quantity, and proportion of each component at the time of actual implementation can be changed at will, and the layout of the components may be more complicated.

In addition, in the following description, specific details are provided to facilitate a thorough understanding of the examples. However, it would be understood by those skilled in the art that they can be practiced without these specific details.

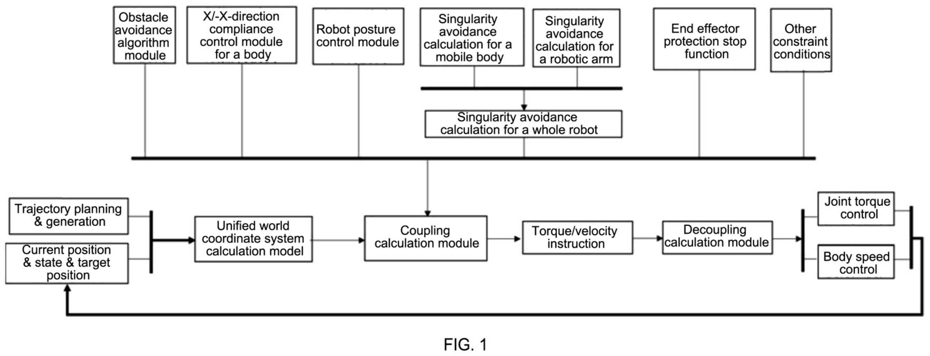

As shown in FIG. 1, an embodiment of the present description provides an integrated control method for a mobile composite robot, characterized by a control framework based on coupling and decoupling control.

In this control framework, movement of a mobile body 1 of a robot and action of a robotic arm 2 are described in a unified world coordinate system. A robot calculation model is described and expressed in the unified world coordinate system based on trajectory planning data and current robot state data, and then a coupling calculation module is employed to couple each algorithm module into a control loop. Afterwards, torque and velocity instructions for an end effector 3 of the robot are obtained through conversion, and the instructions are decoupled and decomposed using a decoupling calculation module into a velocity control instruction for the mobile body 1 of the robot and torque control instructions for each joint of the robotic arm 2 to perform corresponding control. In the drawing, velocity control refers to velocity control over the mobile body 1; the joint torque control refers to control over the robotic arm 2; and dynamic real-time data of the two serves as feedback amounts.

Through coupling calculation of each functional module as shown in FIG. 1, an actual effect is a control effect of each coupling module formed in the robot control, such as a compliance control effect in forward and backward directions of the robot; for another example, an operation posture obtained by the robot for position information about an operation object, which posture already avoids a singularity position potentially generated by the robot during movement of the mobile body 1 or action of the robotic arm 2, so that operations on the operation object can be performed in one go without repeated posture adjustments, thus improving system efficiency and fluency of actions.

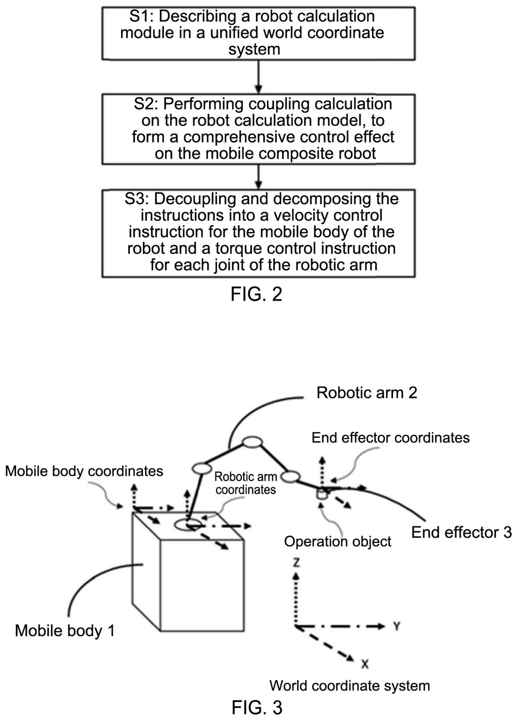

FIG. 2 shows a flowchart for steps of an integrated control method for a mobile composite robot, including:
S1: describing dynamic characteristics of the mobile body 1, the robotic arm 2, and the end effector 3 in the unified world coordinate system, describing a robot calculation model based on trajectory planning data and current robot state data, and expressing a motion state and a posture of each part of the mobile composite robot;
S2: performing coupling calculation based on the robot calculation model obtained in step S1, to generate a comprehensive control effect on the mobile composite robot, which is converted into torque and velocity instructions for the end effector 3; and
S3: performing decoupling calculation on the torque and the velocity instructions of the end effector 3 obtained in step S2, and decoupling and decomposing the torque and the velocity instructions into a velocity control instruction for the mobile body 1 of the robot and a torque control instruction for each joint of the robotic arm 2, while inputting dynamic real-time data of the mobile body 1 and the robotic arm 2 as feedback amounts into the current robot state data in step S1.

The trajectory planning data is derived from a robot dispatch system or calculated by the mobile composite robot. The robot dispatch system directly sends the trajectory planning data wirelessly to the mobile composite robot. Alternatively, the robot dispatch system sends task data to the mobile composite robot, and the mobile composite robot calculates to obtain a trajectory for the mobile body 1 and an action path for the robotic arm 2, thereby generating the trajectory planning data.

As shown in FIG. 3, XYZ represents a mobile manipulation robot and the world coordinate system. In this coordinate system, coordinates of the mobile body 1 of the robot are established on the mobile body 1, coordinates of the robotic arm 2 (five degrees of freedom) are established at a center point of a base of the robotic arm 2, and coordinates of the end effector 3 are established at a joint of the robotic arm where the end effector 3 is located. A coordinate system of the mobile body 1, the coordinates of the robotic arm 2, and the coordinates of the end effector 3 are all based on the world coordinate system. When describing the dynamic characteristics of the mobile robot, all description equations are based on the world coordinate system, thereby achieving a unified mathematical description for the robot as a whole. Motion states and postures of each part/joint of the robot are expressed in the unified world coordinate system. X or -X-direction is a forward or backward direction of the mobile body 1 of the robot.

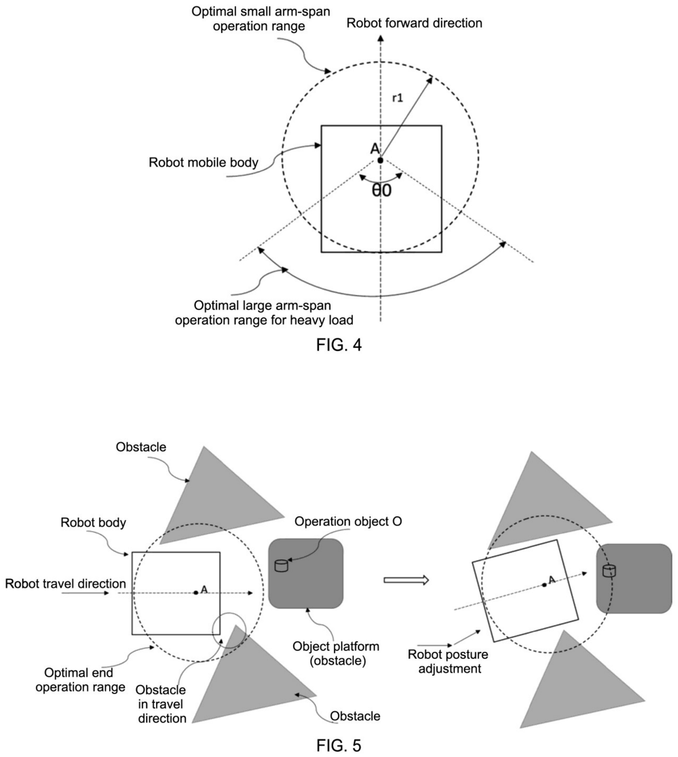

As shown in FIG. 4, a posture control module of a mobile composite robot is configured to control an overall posture of the robot, primarily referring to optimizing an action posture of the end effector 3 of the robot, to achieve superior operational action, including offering an operating region with more flexible degrees of freedom and guaranteed precision.

Specifically, prior to or in preparation for performing an operation on an operation object, the robot adjusts action postures of the mobile body 1 and the robotic arm 2 while moving, so as to execute the operation on the operation object in an optimized manner. Constraint conditions for this optimized manner are as follows:
operating within a specified angle and arm-span range, so as to maintain maximum stability of the mobile body 1 of the robot, thereby ensuring operational precision;
executing an extension operation preferentially with shorter robotic arm 2; and
3) defining a small arm-span operation range with radius rl with high priority, and defining a large arm-span range with θ0 with low priority.

Herein, point A represents a center point of the base of the robotic arm 2, and r1 represents an optimal end operation range of the robotic arm 2, which is less than a maximum arm-span length of the robotic arm 2. The optimal end operation range can be freely defined, for example, defined as two-thirds of the maximum arm-span length of the robotic arm 2. When operating in this range, the robotic arm 2 has superior control performance, and a chassis of the mobile body 1 of the robot has optimal stability and balance performance, which can ensure high-precision actions and rapid response capability for the end effector 3 of the robotic arm 2.

When a large-load operation cannot be executed within a small arm-span range of the robot, low-priority large arm-span operation is performed. In this case, the robotic arm 2 of the robot is constrained to operate within the range of θ0, which can ensure optimal stability for the robot body during high-load operations with large arm-span. This operation space needs to consider multiple factors, such as a specific position of mounting point A of the robotic arm 2 on the robot chassis and a position of a gravity point of the robot chassis. This angle can be defined according to specific robot mechanical structure designs. Under the posture constraints, the robot can perform more optimized pose adjustments in response to identified scenarios, and even can maintain robot body stability while addressing operational requirements in certain extreme conditions.

As shown in FIG. 5, posture control can adapt to narrower scenario operations. In the present technical solution, operations within the range of radius r1 are designated with high priority. Therefore, the robot preferentially adopts a high-priority action scheme upon identifying obstacles, which operation demand is satisfied first through flexible body posture adjustment, and if the operation demand cannot be met, low-priority posture control must be adopted.

On the left side in FIG. 5, when the mobile body 1 of the robot approaches an operation object O, it identifies multiple obstacles in a travel direction, and continuing on the current straight travel route would prevent execution of high-priority operational action. As a result, under the action of the posture control module coupled into the control loop, the robot autonomously adjusts a travel posture, specifically, adjusting the travel direction of the mobile body 1 by a certain angle, and moving the mobile body 1 into a narrow passage for a certain distance (as shown on the right side in FIG. 5), so as to meet a high-priority control requirement, i.e., allowing the operation object O to fall within a high-priority operation range.

If the robot determines, through calculation and obstacle distance identification, that the high-priority control still cannot be satisfied by adjusting the postures of the mobile body 1 and the robotic arm 2, the robot stops adjusting the posture of the mobile body 1, and executes low priority, i.e. large arm-span operation. Execution of the above determination step by the robot is calculation-based preemptive judgment through real-time calculation while moving towards the operation object, which does not involve tentative or trial-and-error repeated pose adjustments typical of conventional control, but manifests as continuous actions, based on step-by-step real-time adjustment control, which is a fundamental distinction from the conventional separate control.

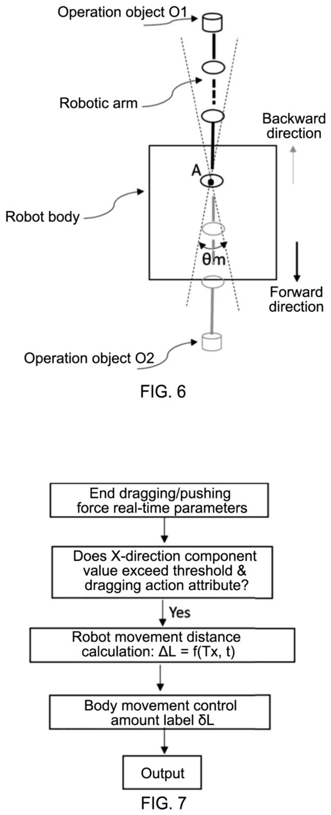

As shown in FIG. 6, a compliance control module of the mobile composite robot is configured to, during operation execution of an end of the robotic arm 2 in a forward or backward direction of the robot, under certain special operation conditions, for example, requiring actions such as dragging and pushing the operation object, enhance operational flexibility and compliance of the robot, and control the mobile body 1 of the robot to move to a certain extent in coordination with the end effector 3 in the forward or backward direction, rather than relying solely on an action of the end of the robotic arm 2 while the mobile body 1 of the robot remains stationary.

During execution of this operation, the end effector 3 of the robot must perform operation on operation object O1 within a specified operation angle range. If the process requires an operation of dragging the operation object O1 in the forward direction of the robot, while the robotic arm 2 is dragging O1, the mobile body 1 of the robot will simultaneously coordinate by moving to a certain extent in the forward direction, thus achieving an integrated dragging effect, and enabling the system to exhibit certain compliance control.

In the present calculation scheme, when the end effector 3 is executing an action, the system determines a torque magnitude based on force conditions at the end effector 3, such as a torque sensor mounted on the end effector 3, a torque sensor mounted on the joint of the robotic arm 2, or parameters on the joint capable of reflecting force conditions at the end, so as to execute a certain degree of movement operation control on the mobile body 1.

As shown in FIG. 7, it shows principle of the compliance control module of the mobile composite robot. Based on the real-time parameters of the dragging or pushing force of the end effector 3 of the module, whether a component value of the force in the forward or backward direction of the robot is higher than a threshold is determined, and whether an attribute of an action currently being executed is indeed a dragging or pushing operation attribute is checked. Once the two conditions are met, a movement distance of the mobile robot is calculated, where the movement distance is a function of a component force Tx in the X-direction and time t. A movement control amount of the mobile body 1 is marked as δL in output data, so as to solve and calculate this component in subsequent decoupling steps upon coupling the module.

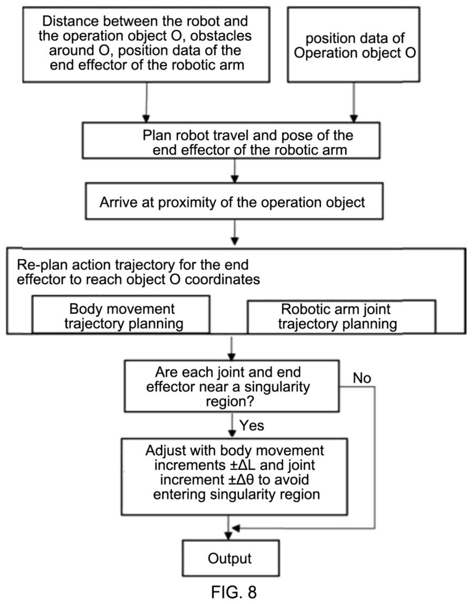

As shown in FIG. 8, it shows a singularity avoidance calculation module of the mobile composite robot. A purpose of this module is to pre-plan robot movement and an action path for robotic arm 2 by calculating unreachable operating points for the end effector 3 of the robotic arm 2, thus preventing the robot from being located at such unreachable posture points, and transforming unreachable operating points into reachable ones by adjusting the postures of the mobile body 1 and the robotic arm 2 of the robot.

When the robot arrives within a certain distance range of the operation object, the robot re-plans an action trajectory for the end effector 3 to reach a coordinate point of the operation object, which includes movement trajectory planning for the mobile body 1 and joint trajectory planning for the robotic arm 2. A purpose thereof is to determine an action trajectory more accurately within a small range, and determine whether each joint and the end effector 3 are currently located in a region near a singularity through real-time state data. If the joint and the end effector 3 are located in a region near the singularity, the robot pose is adjusted with a step length of movement increments ±ΔL and ±Δθ of the mobile body 1, so as to avoid entering a singularity region. When the robot is determined not to enter a region near the singularity, a current trajectory planning result is processed to obtain an adjustment value for output, which is then coupled into a control main loop.

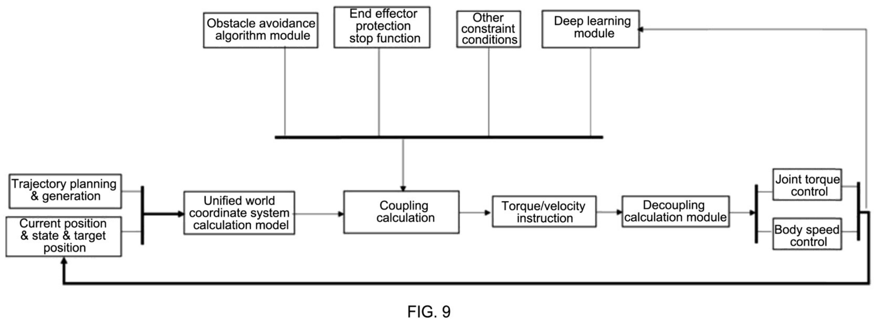

As shown in FIG. 9, the present invention employs deep artificial intelligence algorithms, primarily for training, learning, and performing optimized control on overall behavioral data of the robot. Furthermore, in the present technical solution, deep artificial intelligence algorithms are employed to train and learn the real-time data of the robot, and couple learning outcomes into the control loop to enhance system performance. Within the artificial intelligence algorithms, overall behavioral data of the robot, such as compliance performance, singularity avoidance, and robot posture, is mainly subjected to training, learning, and optimized control, thereby replacing the individual algorithm modules in FIG. 1.

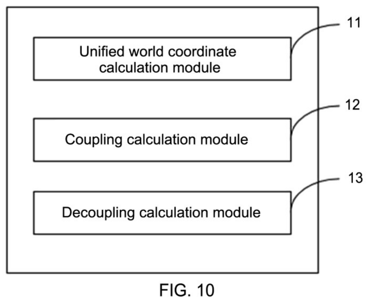

As shown in FIG. 10, an apparatus for an integrated control method for a mobile composite robot according to the prevent invention includes a unified world coordinate calculation module 11, configured to describe dynamic characteristics of a mobile body 1, a robotic arm 2, and an end effector 3 in a unified world coordinate system, describe a robot calculation model based on trajectory planning data and current robot state data, and express a motion state and a posture of each part of the mobile composite robot; a coupling calculation module 12, configured to perform coupling calculation based on the robot calculation model obtained from the unified world coordinate calculation module 11, to form a comprehensive control effect on the mobile composite robot, which is converted into torque and velocity instructions for the end effector 3; and a decoupling calculation module 13, configured to perform decoupling calculation on the torque and the velocity instructions of the end effector 3 obtained from the coupling calculation module 12, and decouple and decompose the torque and the velocity instructions into a velocity control instruction for the mobile body 1 of the robot and a torque control instruction for each joint of the robotic arm 2, while inputting dynamic real-time data of the mobile body 1 and the robotic arm 2 as feedback amounts into current robot state data in the unified world coordinate calculation module 11.

In the present description, identical and similar parts across various embodiments may be understood by referring to each other, and each embodiment focuses on aspects that differ from the other embodiments. Particularly for embodiments described later, the description is relatively concise, and for relevant details, reference can be made to the description in the preceding embodiments.

The above-mentioned are merely for specific embodiments of the present invention, but the scope of protection of the present invention is not limited thereto. Variations or substitutions readily conceivable to any technician familiar with the present technical field within the technical scope disclosed in the present invention shall be covered within the scope of protection of the present invention. Therefore, the scope of protection of the present invention should be determined by the scope of protection of the claims.

## Claims

1. An integrated control method for a mobile composite robot, **characterized in that** the mobile composite robot is provided with a mobile body, a robotic arm, and an end effector, and the integrated control method comprises steps of:
S1, describing the mobile body, the robotic arm, the end effector, and an operation object in a unified world coordinate system, constructing description equations for dynamic characteristics of the mobile composite robot based on the unified world coordinate system, expressing a motion state and a posture of the mobile composite robot; and describing and expressing a robot calculation model based on trajectory planning data and current robot state data;
S2, performing coupling calculation based on the robot calculation model obtained in step S1, to generate an action instruction for the end effector of the mobile composite robot; and
S3, performing decoupling calculation based on the action instruction for the end effector obtained in step S2, performing decoupling and decomposition to obtain a velocity control instruction for the mobile body of the robot and a torque control instruction for each joint of the robotic arm, while inputting dynamic real-time data of the mobile body and the robotic arm as feedback amounts into the current robot state data in the step S1.

2. The integrated control method for the mobile composite robot according to claim 1, **characterized in that** in the step S1, the trajectory planning data is derived from a robot dispatch system or calculated by the mobile composite robot, wherein the robot dispatch system directly sends the trajectory planning data wirelessly to the mobile composite robot; alternatively, the robot dispatch system sends task data to the mobile composite robot, and the mobile composite robot calculates to obtain a trajectory for the mobile body and an action path for the robotic arm; and
in the step S2, the coupling calculation comprises behavioral data calculation, obstacle avoidance algorithms, end-effector protection stop algorithms, and constraint condition algorithms, wherein the behavioral data calculation comprises posture control calculation, compliance control calculation, and singularity avoidance calculation.

3. The integrated control method for the mobile composite robot according to claim 2, **characterized in that** in the step S2, the posture control calculation is generating an optimized action instruction for the end effector based on position data of the operation object and the current robot state data during movement of the mobile composite robot, while satisfying at least one of constraint conditions as follows: the robotic arm performing an operation within a specified angle and arm-span range; defining two priorities based on arm-span range, wherein a small arm-span operation within a defined-distance operation range less than a maximum arm-span length of the robotic arm is defined with high priority; and a large arm-span operation within another defined-distance operation range is defined with low priority, so as to handle the operation object that fails to be addressed by a small arm span.

4. The integrated control method for the mobile composite robot according to claim 2, **characterized in that** in the step S2, the compliance control calculation determines a torque magnitude based on force conditions at the end effector to execute movement operation control on the mobile body, wherein the force conditions are determined by a torque sensor mounted on the end effector or the robotic arm or by real-time parameters from the joint of the robotic arm reflecting the force conditions at the end effector, and wherein in response to a component value of an end dragging or pushing force in a movement direction of the mobile composite robot in the force conditions exceeding a set threshold and a current action attribute being dragging or pushing, a movement distance function is calculated for the mobile composite robot.

5. The integrated control method for the mobile composite robot according to claim 2, **characterized in that** in the step S2, the singularity avoidance calculation is, upon the mobile composite robot arriving at proximity of the operation object, in response to each joint of the robotic arm and the end effector being near a singularity, re-planning the trajectory for the mobile body and the action path for the robotic arm, to avoid entering a singularity region.

6. The integrated control method for the mobile composite robot according to claim 2, **characterized in that** in the step S2, an overall behavioral data calculation result for the robot is derived from learning outcomes of training learning of a deep artificial intelligence algorithm, wherein the deep artificial intelligence algorithm integrates the posture control calculation, the compliance control calculation, and the singularity avoidance calculation, a training model continuously performs optimization calculation on integrated calculation parameters, and outputs a result of the optimization calculation in a form of parameter to a result of the coupling calculation; and input parameters of the training model further comprise primary parameters reflecting performance and action characteristics of the mobile composite robot, including: a movement velocity and an acceleration of the mobile body, a velocity, an acceleration, an angle, and a torque value of an end joint of the robotic arm, and an instruction error value of the trajectory planning data.

7. A control apparatus for a mobile composite robot, **characterized by** implementing the method according to any one of claims 1 to 6, and comprising:
a unified world coordinate calculation unit, comprising the unified world coordinate calculation method, configured to express a motion state and a posture of the mobile composite robot;
a coupling calculation unit, comprising a behavioral data calculation module, an obstacle avoidance algorithm module, an end effecter protection stop module, and a constraint condition module, and configured to generate an action instruction for the end effecter, wherein the behavioral data calculation module comprises a posture control calculation module, a compliance control calculation module, and the singularity avoidance, and is configured to generate an optimized action instruction for the end effecter; and
a decoupling calculation unit, comprising a decoupling calculation method, and configured to generate a velocity control instruction for the mobile body and a torque control instruction for each joint of the robotic arm.

8. A mobile composite robot, **characterized by** comprising the mobile body, the robotic arm, the end effector, a control apparatus of the mobile composite robot, a robot dispatch system, a CPU processor system configured to run a main control loop algorithm, and a memory storing a program instruction.

9. The mobile composite robot according to claim 8, **characterized by** further comprising a GPU processor system configured for deep learning algorithms.

10. A computer-readable storage medium, **characterized by** storing a computer program instruction thereon, wherein the computer program instruction, when executed by a processor, implements the method according to any one of claims 1 to 6.
